# EUROPÄISCHE PATENTSCHRIFT

(11) **EP 1 609 266 B1**
(45) Veröffentlichungstag und Bekanntmachung des Hinweises auf die Patenterteilung: **21.02.2007**
(21) Anmeldenummer: 04717092.3
(22) Anmeldetag: 04.03.2004
(51) Int. Cl.: H04L 1/20, H04L 1/18

(54) **VERFAHREN UND MESSGERÄT ZUM ERMITTELN EINER FEHLERRATE OHNE INKREMENTALE REDUNDANZ**
METHOD AND MEASURING DEVICE FOR DETERMINING AN ERROR RATE WITHOUT INCREMENTAL REDUNDANCY
PROCEDE ET APPAREIL DE MESURE POUR DETERMINER UN TAUX D'ERREURS SANS REDONDANCE INCREMENTALE

(30) Priorität: 03.04.2003 DE 10315249
(43) Veröffentlichungstag der Anmeldung: 28.12.2005
(73) Patentinhaber: Rohde & Schwarz GmbH & Co. KG, 81671 München (DE)
(72) Erfinder: PLAUMANN, Ralf, 85659 Forstern (DE); WINKLHOFER, Max, 80809 München (DE); FASSRAINER, Johannes, 85617 Assling (DE)
(74) Vertreter: Körfer, Thomas
(86) Internationale Anmeldenummer: PCT/EP2004/002218
(87) Internationale Veröffentlichungsnummer: WO 2004/088909

(56) Entgegenhaltungen:
- US-A- 5 657 325
- US-A1- 2002 053 058

## Beschreibung

Die Erfindung betrifft ein Verfahren und ein Messgerät zum Ermitteln einer Fehlerrate bei einer Datenübertragung von einer Sende-/Empfangsstation zu einer Sende-/Empfangseinrichtung, d. h. des Decodierungsgewinns bei Einsatz von Incremental Redundancy.

Bei der Ermittlung von Fehlerraten, die bei der Übertragung von Daten von einer Sende-/Empfangsstation, beispielsweise einer Basisstation eines Mobilfunksystems, an eine Sende-/Empfangseinrichtung, beispielsweise ein Mobiltelefon, und der dort durchzuführenden Decodierung auftreten, wird üblicherweise eine Datenübertragung zwischen einem Messgerät und dem Mobiltelefon durchgeführt, wobei durch das Messgerät die Basisstation des Mobilfunksystems emuliert wird. Das Messgerät ist dabei so aufgebaut, dass es, wie die Basisstation selbst, sämtliche Anforderungen des jeweiligen Standards erfüllt, also auch Maßnahmen zur softwaregestützten Fehlerkorrektur unterstützt.

Bei neueren Mobilfunksystemen ist beispielsweise in dem Standard für EGPRS (Enhanced General Packet Radio Service) vorgesehen, dass zu einer Erhöhung der Sicherheit bei der Übertragung von Daten eine schrittweise Redundanzerhöhung durchgeführt wird. Dies bedeutet, dass nach dem Senden eines ersten nach einem bestimmten Schema faltungscodierten Datenblocks seitens des Empfängers überprüft wird, ob die Übertragung und das Decodieren der empfangenen Daten fehlerfrei erfolgt ist. Sind in dem so erhaltenen Datensatz Fehler enthalten, wird von dem Empfänger die Übertragung weiterer, redundanter Daten bei der Basisstation angefordert.

Diese so genannte "Incremental Redundancy" ist z. B. in der US 5,657,325 beschrieben.

Die redundanten Daten werden dabei zusammen mit dem ersten Datenblock aus einem ursprünglich eingegebenen Datensatz durch Faltungscodierung erzeugt, wobei für jede Information des ursprünglichen Datensatzes redundante Informationen generiert werden. So werden beispielsweise beim Codierer MCS9 beim Standard EGPRS aus jedem Bit drei Bits erzeugt. Um diese dreifache Datenmenge nicht in jedem Fall übertragen zu müssen, werden nach einem Punktierungsschema Bits aus dieser dreifachen Datenmenge entfernt und in einem Speicher abgelegt. Die übrigen Bits werden als erster Datenblock an den Empfänger gesendet und von diesem ausgewertet.

Bei einer nicht erfolgreichen Übertragung und Auswertung des empfangenen ersten Datenblocks wird von dem Empfänger das fehlerhafte Empfangen der Daten an den Sender rückgemeldet, woraufhin von dem Sender redundante Daten in einem zweiten Datenblock, der durch Eliminieren von Bits aus der dreifachen Datenmenge nach einem zweiten Punktierungsschema gebildet wird, an den Empfänger gesendet werden. Mit Hilfe dieser redundanten Daten können die Fehler, welche beim Empfangen des ersten Datenblocks aufgetreten sind, korrigiert werden oder es wird noch einmal ein weiterer redundanter Datenblock angefordert.

Die beschriebene Vorgehensweise hat für die Bewertung der Qualität eines Mobiltelefons beispielsweise bei einem Produktions-Testsystem den Nachteil, dass beim Ermitteln einer Fehlerrate, die durch das Mobiltelefon verursacht wird, durch die schrittweise Redundanz die ursprünglich bei der Übertragung aufgetretenen Fehler eliminiert werden und damit eine Auswertung der tatsächlich auf Grund der Hardware des Mobiltelefons verursachten Fehler ohne die Korrektur durch die Software mit Hilfe der redundanten Daten nicht möglich ist.

Der Erfindung liegt die Aufgabe zugrunde, ein Verfahren und ein Messgerät zu schaffen, bei dem die Fehlerrate für eine Sende-/Empfangseinrichtung ohne eine Fehlerkorrektur mit redundanten Daten ermittelt wird.

Die Aufgabe wird durch das erfindungsgemäße Verfahren nach Anspruch 1 sowie das erfindungsgemäße Messgerät nach Anspruch 7 gelöst.

Nach dem erfindungsgemäßen Verfahren wird aus einem ursprünglichen Datensatz zunächst durch ein Verfahren, wie es z.B. bei dem Betrieb einer Basisstation nach dem EGPRS-Standard verwendet wird, eine Prüfgröße für die ursprünglichen Daten dem Ursprungsdatenblock hinzugefügt, um nach der Übertragung und Decodierung die Richtigkeit der übertragenen Daten überprüfen zu können. Der Ursprungsdatenblock wird zusammen mit der Prüfgröße faltungscodiert, so dass eine vergrößerte Datenmenge erzeugt wird, in der die ursprüngliche Information des Ursprungsdatenblocks mehrfach redundant vorhanden ist.

Aus dieser vergrößerten Datenmenge werden mehrere Datenblöcke erzeugt, wobei in jedem Datenblock die Informationen des Ursprungsdatenblocks einschließlich der Prüfgröße enthalten ist, jedoch oft keine darüberhinausgehenden redundanten Informationen. Ein solcher erster Datenblock wird von einer Sende-/Empfangsstation des Messgeräts in bekannter Weise moduliert und verstärkt und schließlich über eine Antenne gesendet.

Dieser gesendete erste Datenblock wird von einer Sende-/Empfangseinrichtung, d.h. dem Prüfling (DUT), empfangen und entsprechend dem verwendeten Codierungsschema ("convolutional code") der Sende-/Empfangsstation decodiert. Der so erhaltene Datensatz wird anhand der Prüfgröße auf seine Übereinstimmung mit dem Ursprungsdatenblock überprüft. Wird dabei ein Fehler bei der Übertragung und der Decodierung in der Sende-/Empfangseinrichtung festgestellt, so wird durch die Sende-/Empfangseinrichtung bei der Sende-/Empfangsstation die Übertragung eines weiteren, redundanten Datenblocks angefordert.

Diese Anforderung durch die Sende-/Empfangseinrichtung wird von der Sende-/Empfangsstation empfangen, woraufhin der gleiche Datenblock, der ursprünglich bereits gesendet wurde, erneut gesendet wird. Durch dieses erneute Versenden des gleichen Datenblocks erhält die Sende-/Empfangseinrichtung keine redundante Information und kann damit auch einen Decodierfehler nicht mit Hilfe von Incremental Redundancy korrigieren. Es lassen sich daher mit Hilfe dieses Verfahrens die tatsächlich auf Grund des Geräts entstandenen Fehler bei der Übertragung von Daten ermitteln.

In den Unteransprüchen sind vorteilhafte Weiterbildungen des erfindungsgemäßen Verfahrens und des Messgeräts ausgeführt.

Insbesondere ist es vorteilhaft, bei der Erzeugung der redundanten Datenblöcke anstelle der verschiedenen, redundanten Datenblöcke in einem Speicher an sämtlichen für die verschiedenen redundanten Datenblöcke vorgesehenen Speicherplätzen den gleichen Datenblock abzulegen, welcher zur erstmaligen Übertragung vorgesehen ist. Die weitere Auswahl eines bestimmten Datenblocks bei der erneuten Anforderung durch die Sende-/Empfangseinrichtung kann damit entfallen. Wird beispielsweise nach einer fehlerhaften Übertragung ein zweiter, redundanter Datenblock angefordert, so kann einfach der an dem Speicherplatz des zweiten, redundanten Datenblocks abgelegte Datenblock gesendet werden, da dieser identisch mit dem zuvor gesendeten ersten Datenblock ist.

Gemäß einer weiteren vorteilhaften Ausgestaltung der Erfindung wird in den verschiedenen Speicherplätzen des Speichers jeweils ein redundanter Datenblock abgelegt, wobei zur Ermittlung der Fehlerrate ohne eine Fehlerkorrektur durch eine Auswahlvorrichtung unabhängig von der angeforderten Versendung eines weiteren, redundanten Datenblocks jeweils derjenige Datenblock ausgewählt wird, der ursprünglich versendet wurde. Dies ist insbesondere vorteilhaft, wenn zusätzlich zu der Fehlerrate ohne eine Fehlerkorrektur auch die Fehlerrate, die bei Verwendung redundanter Informationen auftritt, ermittelt werden soll. In einem solchen Fall kann gemäß einer weiteren vorteilhaften Ausführungsform auf Grund einer Anforderung eines redundanten Datenblocks durch die Sende-/Empfangseinrichtung von der Sende-/Empfangsstation tatsächlich die angeforderte redundante Information durch Versenden eines in dem Speicher abgelegten Datenblocks gesendet werden.

Besonders vorteilhaft ist es weiterhin, das verwendete Punktierungsschema verändern zu können, um damit gezielt für verschiedene Punktierungsschemata die jeweils durch die Hardware verursachte Fehlerrate ermitteln zu können.

Bevorzugte Ausführungsbeispiele der Erfindung werden anhand der Zeichnung in der nachfolgenden Beschreibung näher erläutert. Es zeigen:
- Fig. 1: eine schematische Darstellung des Aufbaus einer Sende-/Empfangsstation und einer Sende/Empfangseinrichtung zur Ermittlung einer Fehlerrate,
- Fig. 2: eine schematische Darstellung zur Übertragung von Daten in Datenblöcken bei EGPRS,
- Fig. 3: schematische Darstellung des zeitlichen Ablaufs bei einem erneuten Versenden eines Datenblocks,
- Fig. 4: eine Messanordnung mit einem erfindungsgemäßen Messgerät und einem Mobiltelefon,
- Fig. 5: eine schematische Darstellung zur Erzeugung und erfindungsgemäßen Senden von Datenblöcken und
- Fig. 6: eine schematische Darstellung zur Fehlerkorrektur mittels inkrementeller Redundanz.

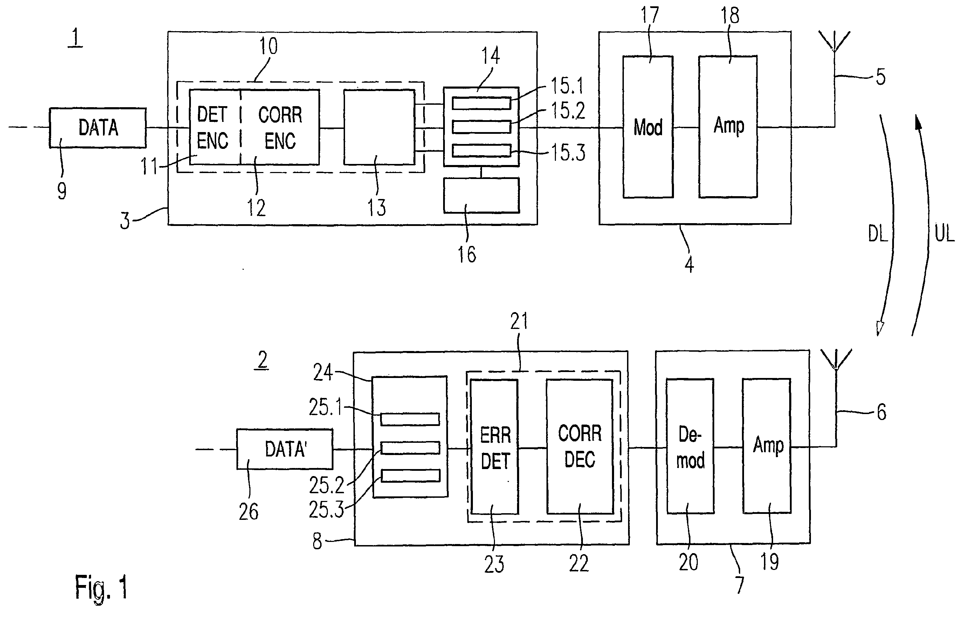

Bevor das erfindungsgemäße Verfahren im Einzelnen erläutert wird, soll zunächst anhand der Fig. 1 die Übertragung von Daten unter Verwendung der schrittweisen Redundanz erläutert werden. Die Datenübertragung erfolgt über eine Luftschnittstelle, bei der eine Übertragung von Information sowohl von einer Sende-/Empfangsstation 1 zu einer Sende-/Empfangseinrichtung 2 als auch in umgekehrter Richtung erfolgt.

Die in digitaler Form vorliegenden, zu übertragenden Daten werden in der Sende-/Empfangsstation 1 zunächst durch einen Codierblock 3 verarbeitet. Die von dem Codierblock 3 ausgegebenen Daten werden von einem Sende-/Empfangsblock 4 moduliert, verstärkt und schließlich über eine Antenne 5 gesendet.

Die von der Antenne 5 gesendeten Signale werden von einer Antenne 6 der Sende-/Empfangseinrichtung 2 empfangen und einem Sende-/Empfangsblock 7 der Sende-/Empfangseinrichtung 2 zugeführt. Der Sende-/Empfangsblock 7 ist mit einem Decodierblock 8 verbunden, in dem aus den codierten Daten die ursprünglichen Daten wieder zurückgewonnen werden und deren Richtigkeit überprüft wird.

Die Codierung der Daten erfolgt in dem Codierblock 3, der hierzu eingangsseitig einen Ursprungsdatenblock 9 von beispielsweise 600 Bit Länge empfängt und diesen zunächst einem Prüfgrößenabschnitt 11 zuführt. In dem Prüfgrößenabschnitt 11 wird dem Ursprungsdatenblock 9 eine Prüfgröße hinzugefügt, welche sich aus den Daten des Ursprungsdatenblocks 9 berechnet. Eine solche Prüfgröße kann z. B. mit Hilfe eines CRC-Verfahrens (Cyclic Redundancy Check) bestimmt werden. Der Ursprungsdatenblock 9 wird dann zusammen mit der Prüfgröße einem Codierabschnitt 12 zugeführt.

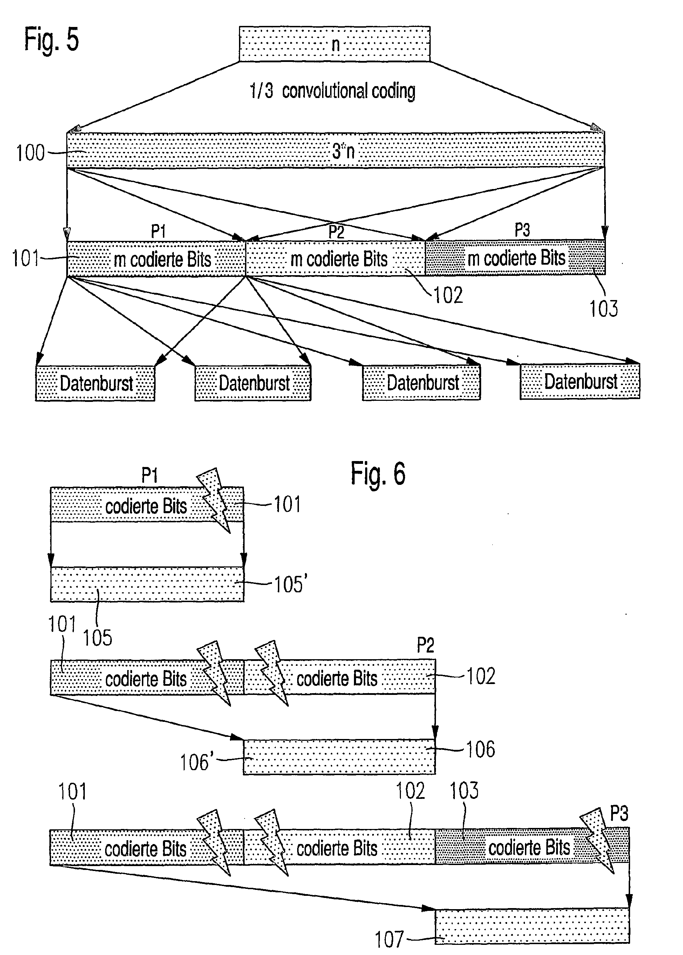

In dem Codierabschnitt 12 werden aus den ursprünglichen Daten des Ursprungsdatenblocks 9 zusammen mit der Prüfgröße zusätzlich redundante Daten durch Faltungscodierung erzeugt, wozu ein so genannter "convolutional coder" verwendet wird. Dabei wird beispielsweise bei einem 1/3-Coder für jedes Bit des Ursprungsdatenblocks 9 sowie der Prüfgröße ein zweites und drittes redundantes Bit erzeugt, wie dies in Fig. 5 gezeigt ist.

Der so erzeugte Datensatz 100 enthält mehrfach redundante Informationen sowohl bezüglich des Ursprungsdatenblocks 9 als auch der hinzugefügten Prüfgröße. Zur Vermeidung von unnötiger Datenübertragung werden aus diesem so erzeugten Datensatz in einem Punktierabschnitt 13 (Fig. 1) unter Zuhilfenahme eines bestimmten Punktierungsschemas P1 redundante Bits entfernt, so dass schließlich ein erster Datenblock 101 übrig bleibt, welcher ohne redundante Informationen die Informationen des Ursprungsdatenblocks 9 und der Prüfgröße enthält.

Weiterhin werden unter Zuhilfenahme eines weiteren Punktierungsschemas P2 andere redundante Bits in dem Punktierabschnitt 13 entfernt, so dass ein zweiter Datenblock 102 entsteht, welche sich von dem ersten Datenblock 101 unterscheidet, dabei jedoch denselben Informationsinhalt wie der erste Datenblock 101 aufweist. Auf dieselbe Weise wird mit einem dritten Punktierungsschema P3 ein dritter, wiederum redundanter Datenblock 103 erzeugt.

Der erste, zweite und dritte Datenblock werden in dafür vorgesehenen Speicherplätzen 15.1, 15.2 und 15.3 eines Speichers abgelegt. Mit Hilfe einer Auswahlvorrichtung 16 können dem Speicher 14 die an den Speicherplätzen 15.1 bis 15.3 abgelegten Datenblöcke entnommen werden und dem Sende-/Empfangsblock 4 der Sende-/Empfangsstation 1 zugeführt werden. Ist für einen Ursprungsdatenblock 9 eine erstmaligen Übertragung der Informationen vorgesehen, so wird stets z.B. der erste Datenblock, der z. B. in dem Speicherplatz 15.1 abgelegt ist, dem Sende-/Empfangsblock 4 zugeführt. Alternativ können die Datenblöcke auch kontinuierlich neu generiert werden.

Der Sende-/Empfangsblock 4 umfasst die zur Aufbereitung des ersten Datenblocks erforderlichen Vorrichtungen, von denen lediglich beispielhaft ein Modulator 17 und ein Verstärker 18 dargestellt sind. Nachdem in dem Modulator 17 der erste Datenblock moduliert wurde, wird er von dem Verstärker 18 verstärkt, so dass er anschließend über die Antenne 5 gesendet werden kann.

Empfängt der Sende-/Empfangsblock 7 der Sende-/Empfangseinrichtung 2 über die Antenne 6 dieses Signal, so wird in dem Sende-/Empfangsblock 7 das empfangene Signal zunächst in einem Empfangsverstärker 19 verstärkt und anschließend in bekannter Weise in einem Demodulator 20 demoduliert. Die demodulierten Daten des empfangenen ersten Datenblocks werden an den Decodierblock 8 weitergeleitet, wo sie zunächst unter Verwendung des in dem Codierabschnitt 12 verwendeten Codierverfahrens in einem Decodierabschnitt 22 decodiert werden.

Die nunmehr in decodierter Form vorliegenden Daten des ersten Datenblocks werden in einem Prüfabschnitt 23 hinsichtlich ihrer Identität mit dem Ursprungsdatenblock 9 überprüft. Wird dabei eine Identität zwischen den aus dem übertragenen ersten Datenblock ermittelten Daten und dem Ursprungsdatenblock 9 festgestellt, so kann in der Verbindung zwischen der Sende-/Empfangsstation 1 und der Sende-/Empfangseinrichtung 2 in einem nächsten Schritt die Übertragung eines neuen Ursprungsdatenblocks erfolgen.

Wird dagegen von dem Prüfabschnitt 23 festgestellt, dass die aus dem übertragenen ersten Datenblock ermittelten Daten nicht mit dem Ursprungsdatenblock 9 übereinstimmen, so werden die aus dem übertragenen ersten Datenblock ermittelten Daten an einem ersten Speicherplatz 25.1 eines Empfangsspeichers 24 abgelegt. Um mit Hilfe dieser bereits empfangenen Daten die vollständige Information zu erhalten, wird von der Sende-/Empfangseinrichtung 2 ein Signal zur Anforderung eines weiteren, redundanten Datenblocks an die Sende-/Empfangsstation 1 gesendet, um mit Hilfe der weiteren redundanten Daten die Fehler korrigieren zu können. Dabei braucht aufgrund der unterschiedlichen Datenblöcke auch der zweite Datenblock nicht vollständig fehlerfrei übertragen zu werden, um zu einer Fehlerkorrektur ausreichende Redundanz zu gewährleisten.

Auf Grund dieser Anforderung wird in der Sende-/Empfangsstation 1 von der Auswahlvorrichtung 16 ein anderer als der zuvor übertragene Datenblock ausgewählt, zum Beispiel derjenige Datenblock, welcher an dem zweiten Speicherplatz 15.2 des Speichers 14 abgelegt ist. In dem Decodierblock 8 wird mit den Daten des empfangenen zweiten Datenblocks, welcher redundant zu dem bereits empfangenen ersten Datenblock ist, erneut eine Auswertung durchgeführt. Sollte dabei trotz der redundanten Information die vollständige Richtigkeit der ermittelten Daten und damit eine fehlerfreie Übertragung noch immer nicht erreicht sein, so werden die aus dem übertragenen zweiten Datenblock 102 ermittelten Daten an einem zweiten Speicherplatz 25.2 des Empfangsspeichers 24 abgelegt.

Von der Sende-/Empfangseinrichtung wird daraufhin wiederum ein Signal zur Anforderung eines weiteren redundanten Datenblocks gesendet, woraufhin von der Auswahlvorrichtung 16 der dritte Datenblock, der an dem dritten Speicherplatz 15.3 des Speichers 14 abgelegt ist, selektiert wird und der dritte Datenblock zur Übertragung an den Sende-/Empfangsblock 4 weitergegeben wird.

Diese Vorgehensweise zur Korrektur von Fehlern ist schematisch in Fig. 6 dargestellt. Aus einem ersten übertragenen Datenblock 101, welcher unter Verwendung eines ersten Punktierungsschemas P1 entstanden ist, werden Nutzdaten 105 ermittelt. Ein Teil 105' der Nutzdaten 105 weist dabei Fehler auf. Auch nach dem Empfangen und Decodieren von einem zweiten Datenblock 102, der unter Verwendung eines zweiten Punktierungsschemas P2 erzeugt wurde, können in den Nutzdaten 106, die mit den Informationen des ersten und des zweiten Datenblocks 101 und 102 ermittelt wurden, noch Fehler 106' enthalten sein. Schließlich kann die erneute Übertragung von redundanter Information in Form des dritten, mit einem dritten Punktierungsschema P3 erzeugten Datenblocks 103 zu einer richtigen Übermittlung der Nutzdaten 107 des Ursprungsdatenblocks 9 führen. Wenn dies immer noch nicht der Fall ist, wird wieder mit der Übertragung des mit dem ersten Punktierungsschema P1 erzeugten Datenblocks 101 fortgefahren.

Erfindungsgemäß wird dagegen gerade zu Meßzwecken verhindert, dass bei einer Anforderung eines weiteren Datenblocks von der Auswahlvorrichtung 16 ein zu dem zuvor gesendeten Datenblock redundanter weiterer Datenblock gesendet wird. Wird durch den Prüfabschnitt 23 bei der Auswertung der Daten eines empfangenen ersten Datenblocks festgestellt, dass die ermittelten Daten nicht mit dem Ursprungsdatenblock 9 übereinstimmen, so wird von der Sende-/Empfangseinrichtung 2 ein Signal zur Anforderung eines weiteren, redundanten Datenblocks gesendet, wie dies im vorstehend beschriebenen realen Betrieb auch erfolgt. Für die Sende-/Empfangseinrichtung 2 ist nicht erkennbar, dass es sich um eine Messung handelt.

Im Gegensatz zum Betrieb mit einer realen Basisstation wird jedoch, um eine einen Hardware-Fehler überdeckende Software-Fehlerkorrektur auszuschließen, durch die zu dem Meßgerät gehörende Sende-/Empfangsstation 1, durch welche eine reale Basisstation emuliert wird, derselbe Datenblock, der zu der fehlerbehafteten Auswertung geführt hat, erneut gesendet, wie es für den ersten Datenblock 101 in Fig. 5 gezeigt ist. Hierzu kann von der Auswahlvorrichtung 16 erneut auf beispielsweise den ersten Speicherplatz 15.1 des Speichers 14 zugegriffen werden.

Alternativ können auch der erste Speicherplatz 15.1, der zweite Speicherplatz 15.2 und der dritte Speicherplatz 15.3 des Speichers 14 bei der Erzeugung der redundanten Datenblöcke anstatt mit redundanten Datenblöcken mit jeweils dem gleichen Datenblock belegt werden. Wird dann nach einer Übertragung des ersten Datenblocks durch die Sende-/Empfangseinrichtung 2 über ein Antwortsignal ein weiterer, redundanter Datenblock angefordert, so kann tatsächlich durch die Auswahlvorrichtung 16 der in dem zweiten Speicherplatz 15.2 abgelegten Datenblock selektiert werden. Damit kann ein identischer Algorithmus zur Auswahl eines Datenblocks wie bei einer realen Basisstation verwendet werden, ohne dass hierdurch der Sende-/Empfangseinrichtung 2 redundante Informationen übermittelt werden.

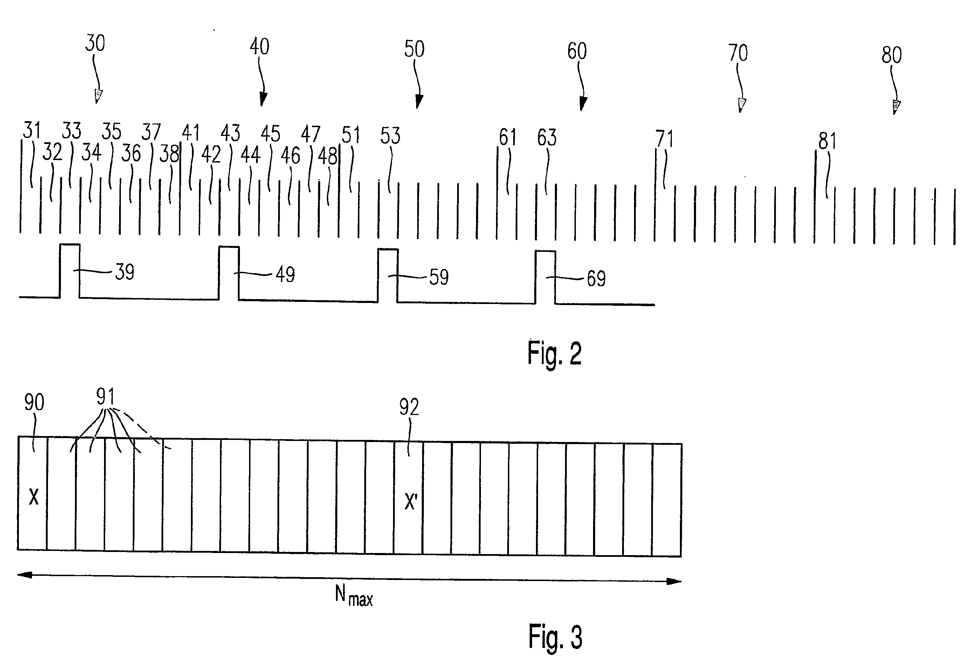

Die Datenübertragung bei einem Mobilfunksystem nach dem EGPRS Standard ist schematisch und stark vereinfacht in Fig. 2 dargestellt. Die Übertragung der Daten erfolgt zwischen der Sende-/Empfangsstation 1 und der Sende-/Empfangseinrichtung 2 in jeweils zumindest einem Zeitschlitz (slot). Jeweils acht Zeitschlitze bilden zusammen einen Rahmen (frame). In der Fig. 2 ist ein erster Rahmen 30, ein zweiter Rahmen 40 ein dritter Rahmen 50, ein vierter Rahmen 60, sowie ein fünfter und sechster Rahmen 70 und 80 dargestellt. Der erste Rahmen 30 ist dabei in acht Zeitschlitze 31 bis 38 unterteilt, der zweite Rahmen 40 entsprechend in acht Zeitschlitze 41 bis 48 usw.

Zur Übertragung der Daten von der Sende-/Empfangsstation 1 an die Sende-/Empfangseinrichtung 2 wird jeweils in einem bestimmten Zeitschlitz eines Rahmens ein Burst übertragen.

In der Fig. 2 wird ein erster Burst 39 in einem dritten Zeitschlitz 33 des ersten Rahmens übertragenen. Ein weiterer Burst 49 wird in einem dritten Zeitschlitz 43 des zweiten Rahmens 40 übertragenen. Dementsprechend werden in dem dritten Rahmen 50 und dem vierten Rahmen 60 wiederum jeweils in dem dritten Zeitschlitz 53 bzw. 63 ein dritter und vierter Burst 59 und 69 übertragen. Jeweils vier solcher Bursts 39, 49, 59 und 69, die in aufeinanderfolgenden Rahmen 30, 40, 50 und 60 übertragenen werden, bilden gemeinsam einen Datenblock.

Für die weiteren Rahmen 70, 80 usw. kann zwischen der Sende-/Empfangsstation 1 und der Sende-/Empfangseinrichtung 2 auch die Verwendung eines anderen Zeitschlitzes vereinbart werden, um den nächsten Datenblock zu übertragen, der wiederum aufgeteilt auf vier Bursts zwischen der Sende-/Empfangsstation 1 und der Sende-/Empfangseinrichtung 2 übertragen wird. Die Übertragung eines ersten Datenblocks oder eines weiteren Datenblocks, wie dies zu Fig. 1 beschrieben wurde, erstreckt sich also über vier aufeinanderfolgende Rahmen.

In Fig. 3 ist wiederum stark vereinfacht dargestellt, dass nach der Übertragung eines solchen Datenblocks 90 andere Datenblöcke 91 übertragen werden können, ehe aufgrund einer Anforderung der Sende-/Empfangseinrichtung 2 ein redundanter Datenblock 92 bzw. bei dem erfindungsgemäßen Verfahren zum Ermitteln einer Fehlerrate derselbe Datenblock ein zweites Mal gesendet wird. Üblicherweise darf zwischen dem fehlerhaft ausgewerteten Datenblock 90 und dem wiederholt gesendeten Datenblock 92 ein bestimmter maximaler zeitlicher Abstand nicht überschritten werden darf. Auf Grund der definierten Länge von etwa 20ms, die ein einzelner Datenblock zur Übertragung benötigt, kann dieser maximale zeitliche Abstand als eine maximale Anzahl von Datenblöcken Nₘₐₓ angegebenen werden, wie dies in der Fig. 3 dargestellt ist.

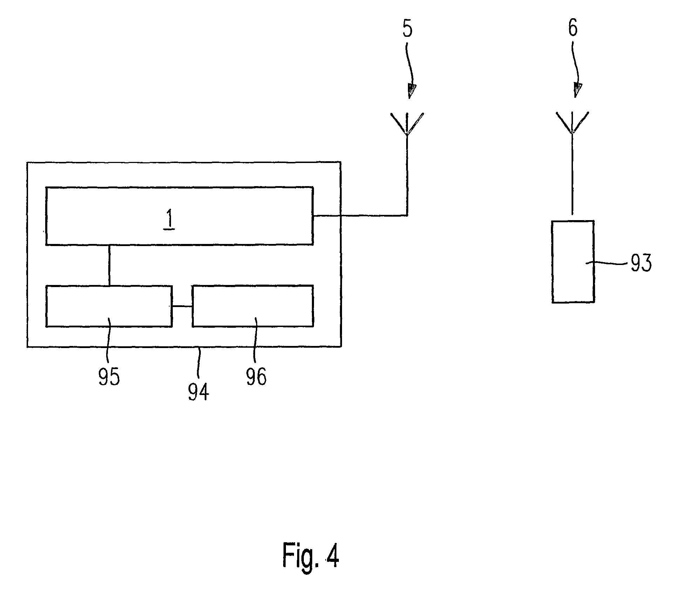

In Fig. 4 ist eine Anordnung zur Ermittlung der Fehlerrate eines Mobiltelefons 93 gezeigt. Das Mobiltelefon 93 weist dabei die in Fig. 1 dargestellte Sende-/Empfangseinrichtung 2 auf. Das Mobiltelefon 93 steht weiterhin in Funkverbindung mit einem Messgerät 94, welches die ebenfalls aus Fig. 1 bekannte Sende-/Empfangsstation 1 umfasst, wobei auch die zur Bestimmung der Fehlerrate benötigte Information über richtig oder fehlerhaft empfangenen Datenblöcke von dem Mobiltelefon 93 über die Funkverbindung an das Messgerät 94 übermittelt wird.

Zusätzlich ist in dem Messgerät 94 ein Controller 95 vorgesehen, der mit der Sende-/Empfangsstation 1, des Messgeräts 94 in Verbindung steht. Der Sende-/Empfangsstation 1 kann damit von dem Controller 95 beispielsweise ein bestimmter Ursprungsdatenblock 9 übermittelt werden. Außerdem erhält der Controller 95 von der Sende-/Empfangsstation 1 die über die von der Luftschnittstelle zwischen den Antennen 5 und 6 übertragene Information, welche Datenblöcke durch den Decodierblock 21 nicht vollständig richtig ausgewertet werden konnten.

Die Information, welcher der Datenblöcke nicht richtig empfangen und ausgewertet werden konnte, wird dabei üblicherweise nicht für jeden Datenblock einzeln von dem Mobiltelefon 93 an das Messgerät 94 übermittelt, sondern zusammengefasst für eine Vielzahl von empfangenen Datenblöcken. Anhand der Information über die Anzahl der korrekt oder fehlerbehaftet übertragenen Datenblöcke wird von dem Controller 95 die Fehlerrate ermittelt und zur Ausgabe beispielsweise an einem Display 96 weitergegeben.

Zusätzlich kann über den Controller 95 für die Sende-/Empfangsstation 1 bestimmt werden, dass, um einen Vergleich der Fehlerraten des Mobiltelefons 93 mit und ohne schrittweise Redundanz zu erhalten, auf eine Anforderung des Mobiltelefons 93 hin anstelle der wiederholten Sendung desselben Datenblocks ein weiterer, sich von dem Datenblock unterscheidender, hierzu jedoch redundanter Datenblock gesendet wird. Das Ergebnis dieser zusätzlichen Auswertung wird dann ebenfalls auf dem Display 96 dargestellt.

Bei der Messung ohne schrittweise Redundanz kann vorzugsweise das verwendete Punktierungsschema zum Erzeugen des ersten Datenblocks und damit auch der wiederholt zu sendenden Datenblöcke durch das Messgerät 94 veränderlich festgelegt werden. Eine entsprechende Eingabe wird von dem Controller 95 an die Sende-/Empfangseinrichtung 1 weitergegeben und bei der Auswahl des zu sendenden Datenblocks durch die Auswahlvorrichtung 16 berücksichtigt. Werden die Speicherplätze 15.1 bis 15.3 mit identischen Datenblöcken belegt, so wird das durch den Controller 95 festgelegte Punktierungsschema schon bei der Speicherung der Datenblöcke berücksichtigt.

## Patentansprüche

1. Verfahren zur Ermittlung einer Fehlerrate bei einer Datenübertragung von einer Sende-/Empfangsstation (1) eines Messgeräts zu einer Sende-/Empfangseinrichtung (2), wobei von der Sende-/Empfangsstation (1) des Messgeräts aus einem Ursprungsdatenblock (9) ein die Information des Ursprungsdatenblocks (9) mit entsprechender Prüfgröße enthaltender erster Datenblock und zumindest ein sich hiervon unterscheidender, redundanter aus dem Ursprungsdatenblock weiterer Datenblock erzeugt werden, mit folgenden Verfahrensschritten:
- Senden des ersten Datenblocks durch die Sende-/Empfangsstation (1) des Messgeräts,
- Empfangen des ersten Datenblocks durch die Sende-/Empfangseinrichtung (2),
- Decodieren des empfangenen ersten Datenblocks in einem Decodierblock (8),
- Überprüfen des ersten Datenblocks auf Übertragungsfehler,
- Anfordern des weiteren, redundanten Datenblocks zur Fehlerkorrektur bei Feststellen eines Fehlers in den übertragenen Daten des ersten Datenblocks
- Empfangen der Anforderung in der Sende-/Empfangsstation (1) des Messgeräts,
**gekennzeichnet durch**
- wiederholtes Senden des ersten Datenblocks anstatt des redundanten Datenblocks, und
- Ermitteln der Rate der fehlerhaft empfangenen ersten Datenblöcke.

2. Verfahren nach Anspruch 1,
**dadurch gekennzeichnet,**
**dass** der erste Datenblock und die weiteren, redundanten Datenblöcke durch Faltungscodierung mit unterschiedlichen Punktierungsschemata erzeugt werden.

3. Verfahren nach Anspruch 2,
**dadurch gekennzeichnet,**
**dass** das für die Erzeugung des ersten Datenblocks verwendete Punktierungsschema festgelegt wird.

4. Verfahren nach einem Anspruch 1 bis 3,
**dadurch gekennzeichnet,**
**dass** die sich unterscheidenden, redundanten Datenblöcke in einem Speicher (14) der Sende-/Empfangsstation (1) abgelegt sind und bei Anforderung des weiteren Datenblocks der an einem dem ersten Datenblock zugeordneten Speicherplatz (15.1) abgelegte erste Datenblock gesendet wird.

5. Verfahren nach einem der Ansprüche 1 bis 3,
**dadurch gekennzeichnet,**
**dass** in einem Speicher (14) der Sende-/Empfangsstation (1) auch anstelle der unterschiedlichen, redundanten Datenblöcke an deren Speicherplätzen (15.2, 15.3) jeweils der erste Datenblock abgelegt wird und bei Anforderung eines weiteren Datenblocks der an dem jeweiligen Speicherplatz (15.2, 15.3) abgelegte Datenblock gesendet wird.

6. Verfahren nach einem der Ansprüche 1 bis 3,
**dadurch gekennzeichnet,**
**dass** zum Vergleich der ermittelten Fehlerrate ohne Fehlerkorrektur mit einer Fehlerrate mit Fehlerkorrektur durch schrittweise Redundanz zusätzlich bei Anforderung eines weiteren Datenblocks ein weiterer redundanter Datenblock von der Sende-/Empfangsstation (1) gesendet wird.

7. Messgerät zum Ermitteln einer Fehlerrate bei einer Datenübertragung von einer Sende-/Empfangsstation (1) des Messgeräts zu einer Sende-/Empfangseinrichtung (2), wobei die Sende-/Empfangsstation (1) des Messgeräts einen Codierblock (3) zum Erzeugen eines die Informationen eines Ursprungsdatenblocks (9) mit entsprechender Prüfgröße enthaltender erster Datenblock und zumindest einen weiteren sich hiervon unterscheidenden, redundanten Datenblock aus dem Ursprungsdatenblock (9) und eine Auswahlvorrichtung (16) zum Auswählen eines zu übertragenden Datenblocks aufweist,
**dadurch gekennzeichnet,**
**dass** bei einer durch die Sende-/Empfangeinrichtung (2) an die Sende-/Empfangsstation (1) des Messgeräts übermittelten Anforderung eines weiteren, redundanten Datenblocks auf Grund einer fehlerhaften Übertragung des ersten Datenblocks der erste Datenblock erneut anstatt des redundanten Datenblocks von der Sende-/Empfangsstation (1) ausgegeben wird.

8. Messgerät nach Anspruch 7,
**dadurch gekennzeichnet,**
**dass** in dem Codierblock (3) ein Speicher (14) mit mehreren Speicherplätzen (15.1, 15.2, 15.3) zur Speicherung von Datenblöcken vorgesehen ist.

9. Messgerät nach Anspruch 8,
**dadurch gekennzeichnet,**
**dass** zur Erzeugung der Datenblöcke jeweils unterschiedliche Punktierungsschemata verwendet werden und das zur Erzeugung des ersten Datenblocks verwendete Punktierungsschema auswählbar ist.

10. Messgerät nach einem der Ansprüche 7 bis 9
**dadurch gekennzeichnet,**
**dass** durch die Auswahlvorrichtung (16) unabhängig von der Anforderung der Sende-/Empfangseinrichtung (16) aus dem Speicher (14) der dort abgelegte erste Datenblock auswählbar ist.

11. Messgerät nach Anspruch 7 oder 8,
**dadurch gekennzeichnet,**
**dass** anstelle der weiteren sich unterscheidenden, redundanten Datenblöcke in einem Speicher (14) an deren Speicherplätzen (15.2, 15.3) der erste Datenblock abgelegt wird.

12. Messgerät nach Anspruch 7 oder 8,
**dadurch gekennzeichnet,**
**dass** zum Vergleich der ermittelten Fehlerrate ohne Fehlerkorrektur mit einer Fehlerrate mit Fehlerkorrektur durch schrittweise Redundanz durch die Auswahlvorrichtung (16) bei einer Anforderung durch die Sende-/Empfangseinrichtung (1) ein weiterer, redundanter Datenblock ausgewählt wird.

## Claims

1. Method for determining an error rate in a data transmission from a transmitter/receiver station (1) of a measuring instrument to a transmitter/receiver device (2), wherein, from an original data block (9), a first data block containing the information of the original data block with corresponding check parameter and at least one further, redundant data block different from the latter are generated by the transmitter/receiver station (1) of the measuring instrument, comprising the following procedural stages:
- transmission of a first data block by the transmitter/receiver station (1) of the measuring instrument,
- reception of the first data block by the transmitter/receiver device (2),
- decoding of the first data block received in a decoding block (8),
- checking the first data block for transmission errors,
- requesting a further, redundant data block for error correction, if an error is determined in the transmitted data of the first data block,
- reception of the request in the transmitter/receiver station (1) of the measuring instrument,
**characterised by**
- repeated transmission of the first data block instead of the redundant data block, and
- determination of the rate of the incorrectly received first data blocks.

2. Method according to claim 1,
**characterised in that**
the first data block and the further, redundant data blocks are generated by convolutional coding with different punctuation schemes.

3. Method according to claim 2,
**characterised in that**
the punctuation scheme used for the generation of the first data block is determined.

4. Method according to any one of claims 1 to 3,
**characterised in that**
the different, redundant data blocks are stored in a memory (14) of the transmitter/receiver station (1), and that the first data block stored in a memory position (15.1) assigned to the first data block is transmitted in the event of a request for the further data block.

5. Method according to any one of claims 1 to 3,
**characterised in that**
the first data block is also stored in a memory (14) of the transmitter/receiver station (1) instead of the different, redundant data blocks and in their respective memory positions (15.2, 15.3), and that the data block stored in the respective memory position (15.2, 15.3) is transmitted in the event of a request for a further data block.

6. Method according to any one of claims 1 to 3,
**characterised in that**,
a further, redundant data block is additionally transmitted by the transmitter/receiver station (1) in the event of a request for a further data block, in order to compare the determined error rate without error correction with an error rate with error correction by incremental redundancy.

7. Measuring instrument for determining an error rate in the event of a data transmission from a transmitter/receiver station (1) of the measuring instrument to a transmitter/receiver device (2), wherein the transmitter/receiver station (1) of the measuring instrument provides a coding block (3) for generating from an original data block (9) a first data block containing the information of the original data block (9) with corresponding check parameter and at least one further, redundant data block different from latter, and a selection device (16) for selecting a data block to be transmitted,
**characterised in that**
the first data block is retransmitted by the transmitter/receiver station (1) of the measuring instrument instead of a redundant data block in response to a request for a further, redundant data block communicated by the transmitter/receiver device (2) to the transmitter/receiver station (1) of the measuring instrument because of an error transmission of the first data block.

8. Measuring instrument according to claim 7,
**characterised in that**
a memory (14) with several memory positions (15.1, 15.2, 15.3) is provided in the coding block (3) for the storage of data blocks.

9. Measuring instrument according to claim 8,
**characterised in that**
different punctuation schemes are used for the generation of the respective data blocks, and that the punctuation scheme used for the generation of the first data block can be selected.

10. Measuring instrument according to any one of claims 7 to 9,
**characterised in that**
the first data block can be selected by the selection device (16) from the memory (14), where it is stored, independently of the request from the transmitter/receiver device (2).

11. Measuring instrument according to claim 7 or 8,
**characterised in that**
the first data block is stored instead of the further, different, redundant data blocks at their respective memory positions (15.2, 15.3) in a memory (14).

12. Measuring device according to claim 7 or 8
**characterised in that**
a further, redundant data block is selected by the selection device (16) in the event of a request by the transmitter/receiver device (1) in order to compare the determined error rate without error correction with an error rate with error correction by incremental redundancy.

## Revendications

1. Procédé permettant de déterminer un taux d'erreurs lors d'une transmission de données d'une station émettrice-réceptrice (1) d'un appareil de mesure à un dispositif émetteur-récepteur (2), dans lequel un premier bloc de données contenant les informations du bloc de données d'origine (9) avec la taille de contrôle correspondante est produit par la station émettrice-réceptrice (1) de l'appareil de mesure à partir d'un bloc de données d'origine (9) et au moins un autre bloc de données redondant se distinguant de celui-ci est produit à partir du bloc de données d'origine, avec les étapes de procédé suivantes consistant à :
- transmettre le premier bloc de données par la station émettrice-réceptrice (1) de l'appareil de mesure,
- recevoir le premier bloc de données par les dispositifs émetteur-récepteur (2),
- décoder le premier bloc de données reçu dans un bloc de décodage (8),
- vérifier que le premier bloc de données ne contient pas d'erreurs de transmission,
- demander l'autre bloc de données redondant pour la correction d'erreurs en cas de détermination d'une erreur dans les données du premier bloc de données transmises
- recevoir la demande dans la station émettrice-réceptrice (1) de l'appareil de mesure,
**caractérisé par**
- la transmission de façon répété du premier bloc de données au lieu du bloc de données redondant, et
- la détection du taux des premiers blocs de données reçus entachés d'erreurs.

2. Procédé selon la revendication 1,
**caractérisé en ce que**,
le premier bloc de données et les autres blocs de données redondants sont produits par un codage convolutif avec des modèles de pointillage différents.

3. Procédé selon la revendication 2,
**caractérisé en ce que**,
le modèle de pointillage utilisé pour la production du premier bloc de données est déterminé.

4. Procédé selon l'une quelconque des revendications 1 à 3,
**caractérisé en ce que**,
les blocs de données redondants se distinguant sont stockés dans une mémoire (14) de la station émettrice-réceptrice (1) et le premier bloc de données stocké sur une adresse de mémoire (15.1) affectée au premier bloc de données est transmis lorsque l'autre bloc de données est demandé.

5. Procédé selon l'une quelconque des revendications 1 à 3,
**caractérisé en ce que**,
chaque fois le premier bloc de données est stocké dans une mémoire (14) de la station émettrice-réceptrice (1) également au lieu des différents blocs de données redondants aux adresses de mémoire de ceux-ci (15.2, 15.3) et le bloc de données stocké à l'adresse de mémoire respective (15.2, 15.3) est transmis lorsqu'un autre bloc de données est demandé.

6. Procédé selon l'une quelconque des revendications 1 à 3,
**caractérisé en ce que**,
un autre bloc de données redondant est transmis par la station émettrice-réceptrice (1) pour comparer le taux d'erreurs détecté sans une correction d'erreurs à un taux d'erreurs avec une correction d'erreurs par une redondance progressive à titre complémentaire lorsqu'un autre bloc de données est demandé.

7. Appareil de mesure permettant de déterminer un taux d'erreurs lors d'une transmission de données par une station émettrice-réceptrice (1) de l'appareil de mesure à un dispositif émetteur-récepteur (2), dans lequel la station émettrice-réceptrice 1 de l'appareil de mesure présente un bloc de codage (3) permettant de produire un premier bloc de données contenant les informations d'un bloc de données d'origine (9) avec la taille de contrôle correspondante et au moins un autre bloc de données redondant se distinguant de celui-ci à partir d'un bloc de données d'origine (9) et un dispositif de sélection (16) permettant de sélectionner un bloc de données à transmettre,
**caractérisé en ce que**,
le premier bloc de données est de nouveau délivré par la station émettrice-réceptrice (1) au lieu du bloc de données redondant lorsqu'une demande d'un autre bloc de données redondant est transmise par le dispositif d'émission-réception (2) à la station émettrice-réceptrice (1) de l'appareil de mesure en raison d'une transmission défectueuse du premier bloc de données.

8. Appareil de mesure selon la revendication 7,
**caractérisé en ce que**,
une mémoire (14) avec plusieurs adresses de mémoire (15.1, 15.2, 15.3) est prévue dans le bloc de codage (3) pour mettre en mémoire les blocs de données.

9. Appareil de mesure selon la revendication 8,
**caractérisé en ce que**,
chaque fois des modèles de pointillage différents sont utilisés pour produire les blocs de données et le modèle de pointillage utilisé pour produire le premier bloc de données peut être sélectionné.

10. Appareil de mesure selon l'une quelconque des revendications 7 à 9
**caractérisé en ce que**,
le premier bloc de données stocké en mémoire peut être sélectionné dans la mémoire (14) par le dispositif de sélection (16) indépendamment de la demande du dispositif émetteur-récepteur (16).

11. Appareil de mesure selon la revendication 7 ou 8,
**caractérisé en ce que**,
le premier bloc de données est stocké dans une mémoire (14) au lieu des autres blocs de données redondants se distinguant aux adresses de mémoire (15.2, 15.3) de ceux-ci.

12. Appareil de mesure selon la revendication 7 ou 8,
**caractérisé en ce que**,
un autre bloc de données redondant est sélectionné pour comparer le taux d'erreurs détecté sans une correction d'erreurs à un taux d'erreurs avec une correction d'erreurs par une redondance progressive par le dispositif de sélection (16) lors d'une demande par le dispositif émetteur-récepteur (1).
